# FASCICULE DE BREVET EUROPEEN

(11) **EP 4 295 020 B1**
(45) Date de publication et mention de la délivrance du brevet: **20.05.2026**
(21) Numéro de dépôt: 22704527.5
(22) Date de dépôt: 07.02.2022
(51) Int. Cl.: F01P 11/14, F01P 3/20, B60K 11/02

(54) **BOUCLE DE REFROIDISSEMENT POUR UN VÉHICULE AUTOMOBILE**
KÜHLKREISLAUF FÜR EIN KRAFTFAHRZEUG
COOLING LOOP FOR A MOTOR VEHICLE

(30) Priorité: 16.02.2021 FR 2101491
(43) Date de publication de la demande: 27.12.2023
(73) Titulaire: Valeo Electrification, 95892 Cergy Pontoise (FR)
(72) Inventeur: DE VAULX, Cedric, 78322 Le Mesnil-Saint-Denis Cedex (FR); AZZOUZ, Kamel, 78322 Le Mesnil-Saint-Denis Cedex (FR)
(74) Mandataire: Valeo Powertrain Systems
(86) Numéro de dépôt international: PCT/EP2022/052899
(87) Numéro de publication internationale: WO 2022/175129

(56) Documents cités:
- EP-A1- 3 293 380
- EP-B1- 2 863 031
- WO-A1-2011/133164
- WO-A1-2017/097769
- DE-A1- 102005 043 699
- DE-A1- 102016 121 997
- DE-A1- 3 719 430
- US-A1- 2017 102 308

## Description

L'invention concerne une boucle de refroidissement, notamment pour un véhicule automobile, et un capteur embarqué sur ladite boucle.

Une boucle de refroidissement utilise un liquide de refroidissement qui échange de la chaleur avec un fluide à refroidir. Le liquide de refroidissement est généralement formé d'un mélange comprenant dans des proportions nominales bien définies un solvant, un soluté ainsi que des additifs anticorrosion. Toutefois, ces proportions peuvent varier au cours du temps entrainant une perte des propriétés antigel et des surchauffes du liquide de refroidissement, ou une corrosion généralisée de la boucle de refroidissement. Par ailleurs, le mélange formant le liquide de refroidissement peut être le siège d'une dissolution d'espèces métalliques ou le siège d'une oxydation et/ou d'une formation de sous-espèces. Ces phénomènes ont de graves conséquences sur la boucle de refroidissement, voire sur l'ensemble du véhicule.

Pour pallier ceci, il est connu d'engager des actions correctives appropriées. Ces actions correctives se déclinent selon le cas en ajout d'additifs anticorrosion, ou en en vidange de la boucle de refroidissement de façon régulière, mais sans contrôle préalable.

Plus rarement, il a été proposé d'effectuer un contrôle de la qualité du liquide de refroidissement, réalisé ex situ, en prélevant un échantillon dudit liquide sur la boucle de refroidissement du véhicule. L'inconvénient de ce type de contrôle est qu'il ne peut être réalisé que lorsque le véhicule est mis à l'arrêt, en garage ou concession, ce qui exclut de fait la possibilité de détecter une éventuelle dégradation du liquide de refroidissement entre deux visites de contrôle.

Cette limite du système actuel de contrôle du liquide de refroidissement appelle le développement d'une solution de surveillance qui soit opérationnelle sans contrainte majeure pour l'utilisateur, et notamment sans besoin de passer par un spécialiste ni de réaliser un prélèvement d'échantillon.

Le document DE102016121997A1 divulgue une mesure de la conductivité électrique du liquide de refroidissement par un capteur embarqué. Cette mesure de conductivité électrique est utilisée pour déterminer une concentration de glycol dans le liquide de refroidissement.

Les documents WO2011/133164A1, EP2863031B1 et US2017/102308A1 traitent de la mesure de viscosité de liquides.

L'invention a pour but de pallier au moins en partie les problèmes précédents et propose à cet effet, selon un premier aspect, une boucle de refroidissement selon la revendication 1.

Ainsi, avec un capteur embarqué dans la boucle de refroidissement, l'invention facilite le contrôle du liquide de refroidissement en dispensant l'utilisateur de l'obligation d'immobiliser le véhicule et de procéder à un prélèvement d'échantillons de test ex situ. L'invention peut également comprendre l'une quelconque des caractéristiques suivantes, prises individuellement ou selon toutes combinaisons techniquement possibles qui forment autant de modes de réalisation de l'invention :
- la boucle de refroidissement comprend un microprocesseur ;
- le microprocesseur est configuré pour exploiter lesdites données ;

L'invention comprend également les caractéristiques suivantes en combinaison:
- ladite boucle de refroidissement est configurée pour fournir une mesure d'une concentration en soluté du liquide de refroidissement à partir desdites données ;
- ladite mesure est obtenue en tenant compte d'une donnée relative à la conductivité électrique et d'une donnée relative à la viscosité du liquide de refroidissement ; De manière optionnelle:
   - la boucle de refroidissement comprend un échangeur de chaleur choisi parmi un radiateur, un condenseur, un refroidisseur d'air de suralimentation, un refroidisseur de gaz d'échappement recirculé ou un refroidisseur de batterie ;
   - le capteur est positionné au niveau d'un circuit de liquide de refroidissement dudit échangeur ;
   - la boucle de refroidissement comprend un ou plusieurs conduits de circulation du liquide de refroidissement;
   - le capteur est positionné au niveau du ou de l'un desdits conduits ;
   - la boucle de refroidissement comprend au moins un composant choisi parmi un vase d'expansion, une pompe de circulation du liquide de refroidissement, une vanne de contrôle de la circulation du liquide de refroidissement, une bride de raccordement et/ou un circuit de refroidissement d'une culasse et/ou d'un bloc moteur ;
   - le capteur est situé au niveau dudit ou desdits composants.

La boucle de refroidissement contient de préférence un échangeur de chaleur. De façon avantageuse, l'échangeur de chaleur comprend l'une quelconque des caractéristiques suivantes, prises individuellement ou selon toutes combinaisons techniquement possibles qui forment autant de modes de réalisation de l'invention :
- l'échangeur de chaleur comprend une boîte collectrice de circulation du liquide de refroidissement ;
- ladite boîte collectrice comprend ledit capteur ;
- la boîte collectrice comprend une ouverture configurée pour recevoir sélectivement le capteur ou un bouchon de fermeture ;
- l'échangeur de chaleur comprend une bride amovible configurée pour être connectée à la boîte collectrice et permettre un raccordement d'une tubulure pour le passage du liquide de refroidissement entre ladite tubulure et la boîte collectrice à travers ladite bride ;
- le capteur est positionné sur la bride.

De façon avantageuse, capteur comprend une sonde configurée pour être mise au contact au moins partiellement du liquide de refroidissement, ledit liquide étant en écoulement ou au repos.

De façon avantageuse, la boucle de refroidissement comporte un composant pour un véhicule automobile, ledit composant comprenant un capteur tel que défini précédemment. Avantageusement, ledit composant est choisi parmi un échangeur de chaleur, une pompe de circulation d'un liquide de refroidissement, une vanne de contrôle de la circulation d'un liquide de refroidissement, une bride de raccordement, une culasse d'un moteur et/ou un bloc moteur.

L'invention concerne également un procédé de contrôle d'un liquide de refroidissement selon la revendication 8.

L'invention sera mieux comprise et d'autres détails, caractéristiques et avantages de l'invention apparaîtront à la lecture de la description suivante, faite à titre d'exemple non limitatif et en référence aux dessins annexés, dans lesquels :
- [Fig. 1a] la figure 1a représente un exemple de boucle de refroidissement selon l'invention;
- [Fig. 1b] la figure 1b représente un deuxième exemple de boucle de refroidissement selon l'invention;
- [Fig. 1c] la figure 1c représente un troisième exemple de boucle de refroidissement selon l'invention;
- [Fig. 1d] la figure 1d représente un quatrième exemple de boucle de refroidissement selon l'invention;
- [Fig. 2] la figure 2 représente des courbes donnant l'évolution de l'indice de réfraction, de la vitesse du son, et de la densité en fonction de la concentration massique en soluté d'un mélange eau/méthanol;
- [Fig. 3] la figure 3 représente l'évolution de l'indice de réfraction en fonction de la concentration massique en soluté d'un mélange eau/éthylène glycol ;
- [Fig. 4] la figure 4 représente l'évolution de la viscosité en fonction de la concentration massique en soluté d'un mélange eau/éthylène glycol ;
- [Fig. 5] la figure 5 représente l'évolution de la conductivité électrique en fonction de la concentration massique en soluté d'un mélange eau/éthylène glycol ;
- [Fig. 6] la figure 6 représente une vue isométrique d'un radiateur de refroidissement selon un premier mode de réalisation de l'invention : vue complète (figure 6a) et vue de détail (figure 6b) ;
- [Fig. 7] la figure 7 représente une vue isométrique du radiateur de refroidissement de la figure 6 équipé de façon différente : vue complète (figure 7a) et vue de détail (figure 7b);
- [Fig. 8] la figure 8 représente une vue partielle d'un radiateur de refroidissement selon un deuxième mode de réalisation de l'invention : vue éclatée (figure 8a) et vue assemblée (figure 8b) ;
- [Fig. 9] la figure 9 représente une vue isométrique d'un condenseur selon l'invention ;
- [Fig. 10] la figure 10 représente une vue isométrique d'un refroidisseur d'air de suralimentation selon l'invention ;
- [Fig. 11] la figure 11 représente une vue isométrique d'un refroidisseur de batterie selon l'invention : vue complète (figure 11b) et vue de détail (figure 11a).

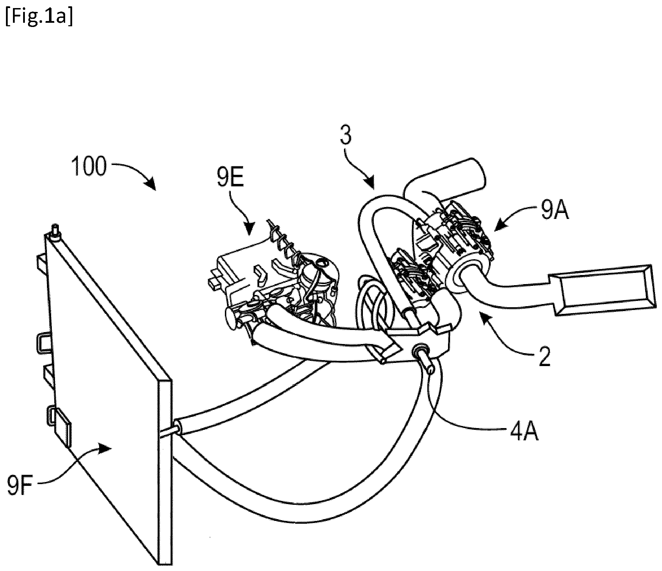

En référence aux figures 1a - 1d, l'invention concerne une boucle de refroidissement 100, 200, 300, 400, notamment pour un véhicule automobile. Ladite boucle est configurée pour permettre un échange de chaleur entre un liquide de refroidissement et un ou plusieurs fluides à refroidir.

En particulier, le liquide de refroidissement est formé d'un mélange comprenant un solvant, par exemple eau ; un soluté, par exemple éthylène glycol ou méthanol ; et/ou des additifs anticorrosion. Ces différents constituants sont présents dans le liquide de refroidissement selon des fractions massiques nominales qui garantissent les performances dudit liquide de refroidissement.

Pour un liquide de refroidissement comprenant un mélange eau/éthylène glycol ou un mélange eau/méthanol, la fraction massique nominale en soluté est de l'ordre de 40 à 50%. Une variation de cette fraction massique au cours du temps entraine une perte des propriétés antigel et des surchauffes du liquide de refroidissement, ainsi qu'une corrosion généralisée de la boucle de refroidissement.

Afin de prévenir ces défaillances, l'invention propose de contrôler la qualité du liquide de refroidissement. On peut alors opérer si nécessaire des actions correctrices selon la nature de l'avarie révélée par l'opération de contrôle. Le contrôle de la qualité du liquide de refroidissement est réalisé à travers le suivi de l'évolution d'un certain nombre de propriétés physiques et/ou chimiques dudit liquide, avantageusement représentatives de la variation des fractions massiques des constituants dudit liquide. De la sorte ladite variation pourra être contrôlée.

Selon l'invention, la boucle de refroidissement comprend au moins un capteur 10 embarqué qui est positionné au moins en partie au contact du liquide de refroidissement.

En particulier, le capteur 10 est configuré pour fournir au moins une donnée relative à la viscosité et une donnée relative à la conductivité électrique dudit liquide de refroidissement. En outre, le capteur 10 comprend une sonde 11 configurée pour être baignée par le liquide de refroidissement en écoulement et/ou au repos. Ladite sonde 11 présente avantageusement des dimensions réduites et peut être de type « flow-through » ou de type « lab on chip ». Il est à noter que les sondes « lab on chip » sont plus compactes et plus précises que les sondes « flow-through ».

Selon des exemples ne faisant pas partie de l'invention, parmi les propriétés physiques et/ou chimiques visées par le capteur 10 figurent l'indice de réfraction, la densité, le potentiel hydrogène et/ou la vitesse de propagation du son, notamment des ultrasons, à travers ledit liquide.

En particulier, la mesure du potentiel d'hydrogène du liquide de refroidissement renseigne sur la qualité générale dudit liquide et donne une indication de la concentration d'additifs anticorrosion. Ainsi, un potentiel d'hydrogène compris entre 9 et 10 traduit une bonne qualité du liquide de refroidissement. En revanche, un potentiel d'hydrogène inférieur à 8 indique qu'une fraction importante des inhibiteurs de corrosion a été consommée et qu'il est nécessaire d'en ajouter au liquide de refroidissement. Par ailleurs, si le potentiel d'hydrogène devient inférieur à 7, cela traduit une oxydation sévère du liquide de refroidissement. Il est alors recommandé de remplacer celui-ci, après avoir préalablement vidangé et rincé la boucle de refroidissement.

Quant à l'indice de réfraction, la conductivité électrique, la viscosité, la densité, et la vitesse du son, leur mesure réalisée sur le liquide de refroidissement permet de remonter à la concentration massique en soluté dudit liquide de refroidissement.

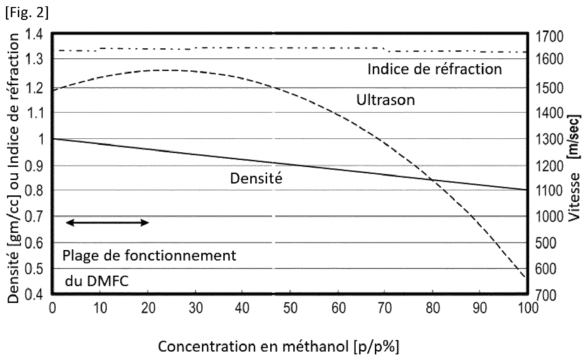

Selon un exemple ne faisant pas partie de l'invention, la figure 2 présente l'évolution de l'indice de réfraction, de la vitesse du son et de la densité en fonction de la concentration massique en soluté pour un liquide de refroidissement comprenant un mélange d'eau comme solvant et de méthanol comme soluté. Ici, l'indice de réfraction et la densité suivent une évolution linéaire par rapport à la fraction massique en soluté, une évolution qui reste peu marquée pour l'indice de réfraction. Par ailleurs, la vitesse du son présente une évolution bien marquée en fonction de la concentration massique en soluté, avec un maximum autour d'une fraction massique en soluté d'environ 30%. Au voisinage de ce maximum, on retrouve deux valeurs de concentration massique en soluté pour une même valeur de vitesse du son.

Afin de discriminer ces deux valeurs de concentration massique en soluté, il est nécessaire de recourir à une courbe donnant l'évolution d'une autre propriété physique et/ou chimique en fonction de la fraction massique en soluté.

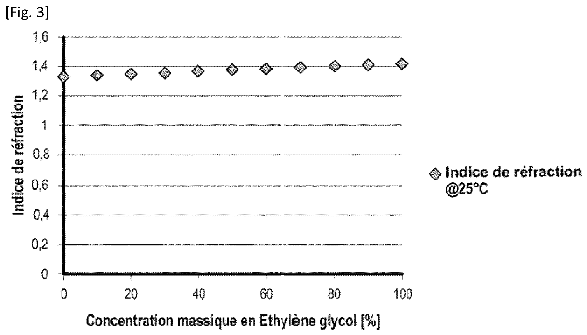

Les figures 3 à 5 présentent respectivement l'évolution de l'indice de réfraction, de la viscosité, et de la conductivité électrique par rapport à la fraction massique en soluté pour un liquide de refroidissement comprenant un mélange d'eau comme solvant et d'éthylène glycol comme soluté.

En référence à la figure 3, l'évolution de l'indice de réfraction en fonction de la concentration massique en soluté est linéaire et reste très limitée sur l'ensemble de la plage de variation de la concentration massique.

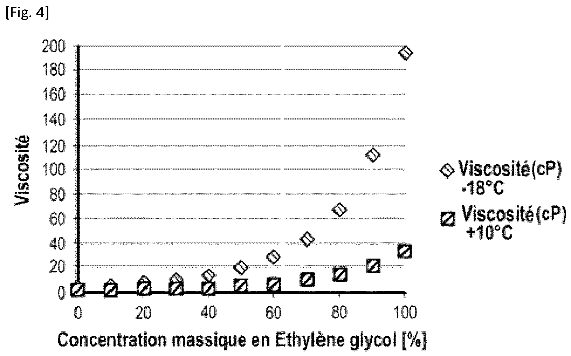

En référence à la figure 4, l'évolution de la viscosité en fonction de la concentration massique en soluté suit une loi puissance, avec une augmentation peu sensible sur une plage inférieure de concentrations massiques en soluté, et une augmentation significative sur une plage supérieure de concentrations massiques en soluté. Il est à noter que l'augmentation de la viscosité sur la plage supérieure de concentrations massiques en soluté est d'autant plus significative que la température du mélange est faible.

Avec une évolution peu sensible sur certaines plages de variation de la concentration massique en soluté, l'indice de réfraction ainsi que la viscosité requièrent, pour être retenus dans le cadre d'exemples ne faisant pas partie de l'invention comme propriétés physiques et/ou chimiques d'intérêt, un niveau de précision très élevé sur la sonde du capteur.

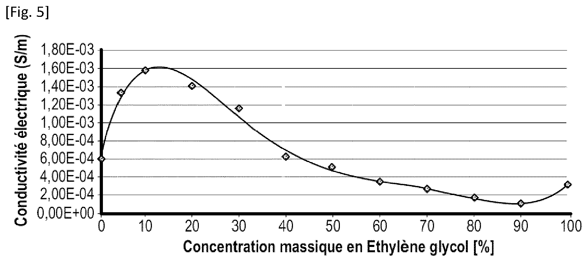

Un tel niveau de précision n'est par contre pas requis pour un capteur visant la conductivité électrique comme propriété physique d'intérêt. En effet, comme illustré sur la figure 5, l'évolution de la conductivité électrique en fonction de la concentration massique en soluté est bien marquée sur l'ensemble de la plage de variation de ladite concentration massique. Toutefois, on observe un premier sommet autour d'une fraction massique en soluté d'environ 15% et un deuxième sommet autour d'une fraction massique en soluté d'environ 90%. Au voisinage de chacun de ces sommets, deux valeurs de concentration massique en soluté coexistent pour une même valeur de conductivité électrique.

Afin de discriminer ces deux valeurs de concentration massique en soluté, il est nécessaire de recourir à une courbe donnant l'évolution d'une autre propriété physique et/ou chimique en fonction de la fraction massique en soluté.

De façon avantageuse, selon l'invention, la valeur de la fraction massique en soluté est déterminée en tenant compte des courbes donnant l'évolution de la conductivité électrique et de la viscosité en fonction de la fraction massique en soluté. L'utilisation combinée de ces deux grandeurs conduit à un résultat fiable de fraction massique sur une grande plage de valeurs.

Il est à noter que la mesure de la conductivité électrique du liquide de refroidissement est effectuée de préférence à l'aide d'un capteur équipé d'une sonde de type «flow-through ». La mesure de la densité et de l'indice de réfraction du liquide de refroidissement, ainsi que la mesure de la vitesse de propagation des ultrasons à travers ledit liquide de refroidissement sont effectuées de préférence à l'aide d'un capteur équipé d'une sonde de type « lab on chip ».

Le calcul d'une valeur de fraction massique en soluté du liquide de refroidissement sur la base d'une donnée de propriété physique et/ ou chimique dudit liquide est réalisé au moyen d'un microprocesseur en interaction avec le capteur. En particulier, le microprocesseur procède par inversion d'un système d'équations linéaires corrélant la ou les propriétés physiques et/ou chimiques du liquide de refroidissement, fournies par le ou les capteur, à la fraction massique en soluté dudit liquide de refroidissement.

Avantageusement, le microprocesseur est embarqué dans la boucle de refroidissement et relié au capteur au moyen d'un câble de connexion ou par tout moyen de transmission de données.

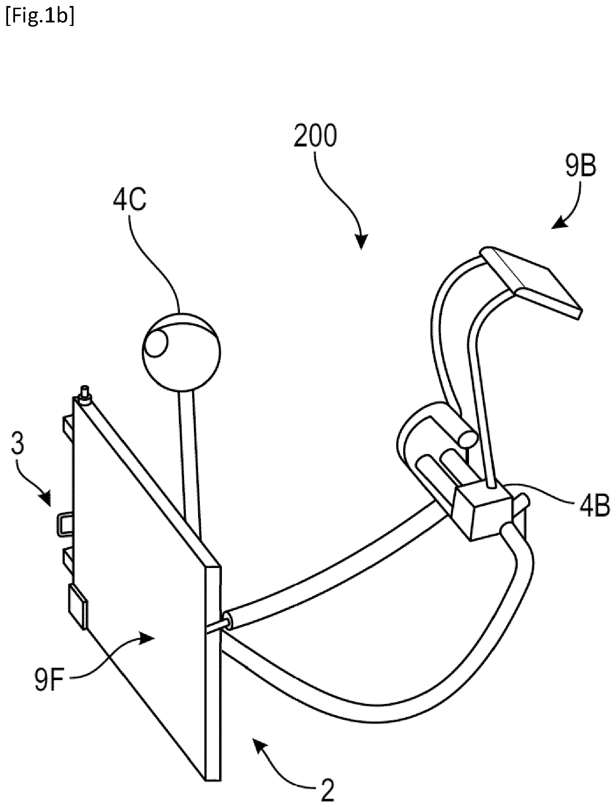

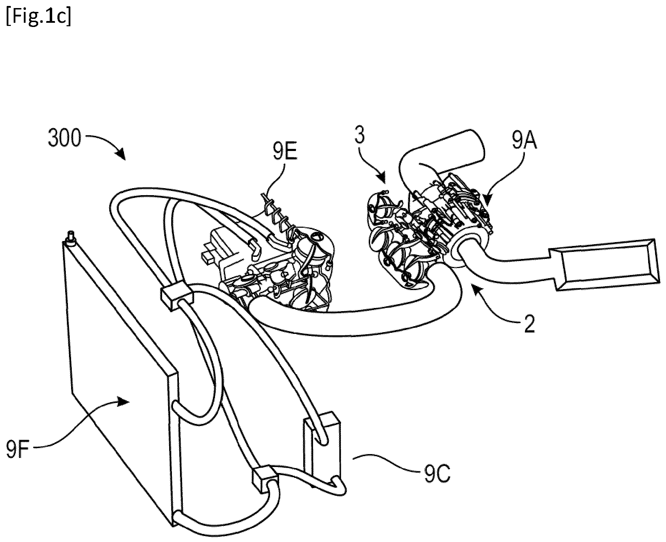

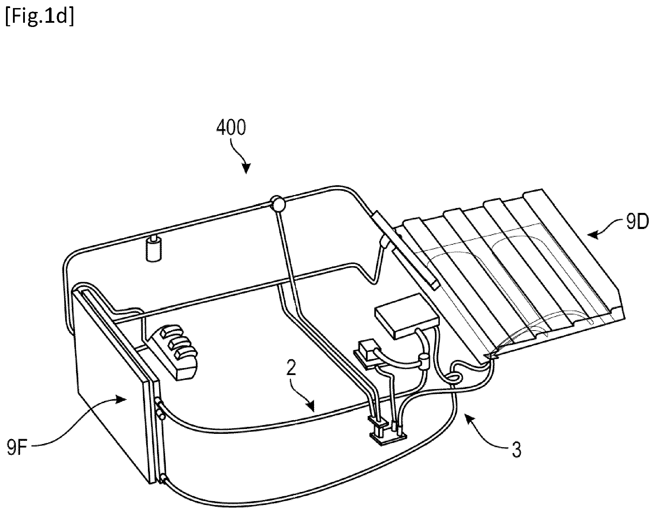

En référence de nouveau aux figures 1a - 1d, la boucle de refroidissement 100, 200, 300, 400 comprend au moins un échangeur de chaleur 9 dans lequel a lieu un transfert de calories entre le liquide de refroidissement et le fluide à refroidir. Ledit échangeur 9 est choisi parmi un radiateur de refroidissement 9F (figure 1a à 1d), un refroidisseur de gaz d'échappement recirculé 9A (figures 1a, 1c), un radiateur de chauffage 9B (figure 1b), un condenseur à eau 9C (figure 1c), un refroidisseur de batterie 9D (figure 1d) ou encore un refroidisseur 9E d'air de suralimentation à eau (figures 1a et 1c). En outre, la boucle de refroidissement 100, 200, 300, 400 comprend éventuellement au moins un composant 4 et au moins un conduit de connexion fluidique.

Dans une boucle de refroidissement 100, 200, 300, 400 telle que décrite ci-dessus, le capteur 10 selon l'invention peut être positionné soit au niveau de l'un quelconque des échangeurs de chaleur 9, soit au niveau du ou de l'un des composants 4, soit encore au niveau du ou de l'un des conduits. En particulier, dans une position embarquée au niveau de l'un des échangeurs de chaleur, le capteur 10 est de préférence située en aval 3 dudit échangeur. Toutefois, une position en amont 2 dudit échangeur reste possible. Ladite boucle 100, 200, 300, 400 pourra aussi être équipée de capteurs positionnés en plusieurs endroits de ladite boucle.

Plus spécifiquement, la figure 1a représente une boucle de refroidissement 100 comprenant un radiateur de refroidissement 9F, un refroidisseur de gaz recirculé 9A ainsi qu'un refroidisseur d'air de suralimentation 9E. Ladite boucle 100 comprend également une vanne de contrôle 4A d'une circulation du liquide de refroidissement entre les échangeurs 9A, 9E, 9F. Dans cette boucle de refroidissement 100, le capteur 10 est monté de préférence en entrée 2 ou en sortie 3 du refroidisseur de gaz recirculé 9A. Toutefois, le capteur 10 peut être monté au niveau du radiateur de refroidissement 9F ou au niveau du refroidisseur d'air de suralimentation 9E. En outre, le capteur 10 peut être monté au niveau de la vanne de contrôle 4A, au niveau du ou des conduits reliant les échangeurs 9A, 9E, 9F entre eux, ou encore au niveau du ou des conduits reliant lesdits échangeurs avec la vanne de contrôle 4A.

La figure 1b représente une boucle de refroidissement 200 comprenant un radiateur de refroidissement 9F ainsi qu'un radiateur de chauffage 9B qui communiquent chacun avec une culasse de moteur et/ou un bloc moteur (non représentés) au moyen de conduits situés en amont 5 et en aval 1. La boucle de refroidissement 200 comprend en outre une pompe d'entrainement 4B du liquide de refroidissement ainsi qu'un vase d'expansion 4C, ladite pompe d'entrainement étant positionnée entre le radiateur de chauffage 9B et le radiateur de refroidissement 9F. Comme dans l'exemple de boucle précédente, le capteur 10 peut être positionné dans n'importe lequel des composants 4A, 4C et/ou n'importe lequel des radiateurs 9F, 9B formant la boucle de refroidissement 200. Ici, le capteur 10 est de préférence montée en sortie 3 du radiateur de refroidissement 9F.

La figure 1c représente une boucle de refroidissement 300 comprenant un radiateur de refroidissement 9F, un refroidisseur de suralimentation d'eau 9E, un refroidisseur de gaz recirculé 9A, ainsi qu'un condenseur à eau 9C. Chacun desdits échangeurs 9A, 9C, 9E, 9F peut être équipé d'un capteur 10. Ici, le capteur 10 est de préférence monté en entrée 2 ou en sortie 3 du refroidisseur de gaz recirculé 9A.

La figure 1d représente une boucle de refroidissement 400 comprenant un radiateur de refroidissement 9F ainsi qu'un refroidisseur de batterie 9D pouvant être équipés chacun d'un capteur 10. Ici, le capteur 10 est monté de préférence en entrée 2 ou en sortie 3 du refroidisseur de batterie 9D.

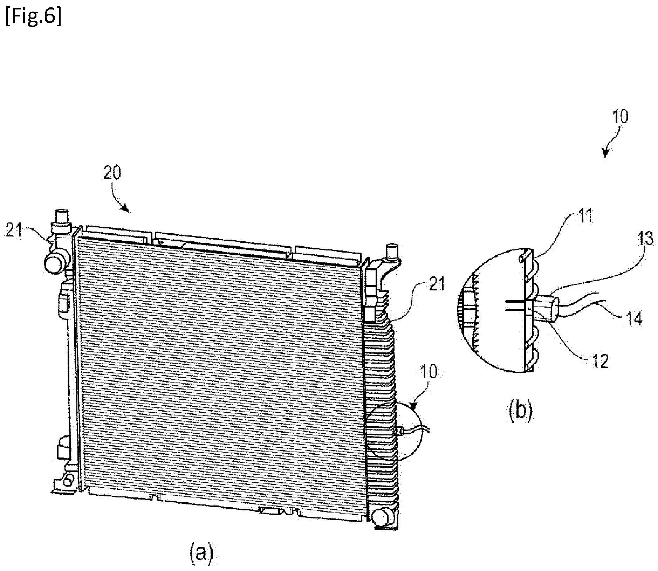

La figure 6a illustre un radiateur de refroidissement 20 de la boucle de refroidissement 200 décrite ci-dessus. Le radiateur 20 comprend un faisceau d'échange de chaleur, et de part et d'autre dudit faisceau, une boîte collectrice 21 de circulation du liquide de refroidissement. Ici, l'une desdites boîtes collectrices 21 présente une ouverture latérale configurée pour recevoir le capteur 10.

Pour ce faire, le capteur 10 comprend un col fileté 12 qui coopère avec un taraudage de l'ouverture latérale de ladite boîte collectrice 21, ainsi qu'une tête 13 destinée à obturer ladite ouverture latérale. En particulier, ledit col 12 porte la sonde 11 qui est mise au contact du liquide de refroidissement en étant reliée au microprocesseur au moyen d'un câble 14 de connexion. Ledit câble passe à travers ladite tête 13 du capteur 10. De façon avantageuse, le col fileté 12 et la tête 13 du capteur 10 forment un seul corps.

Le capteur 10 ainsi formé peut être associé aisément à une boîte collectrice 21 d'un radiateur de refroidissement existant, pour peu que ladite boîte collectrice présente une ouverture de géométrie complémentaire de celle dudit capteur. Un tel capteur assure alors la fonction de fermeture de la boîte collectrice 21.

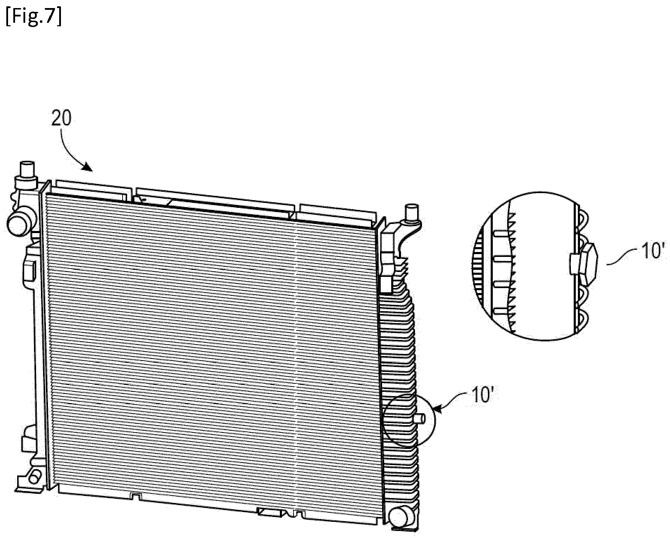

Toutefois, si la présence du capteur au niveau de la boîte collectrice 21 du radiateur de refroidissement 20 n'est pas nécessaire, un bouchon 10' sans autre fonction que celle de fermeture peut être employé afin d'obturer l'ouverture latérale de ladite boîte collectrice 21. Un tel bouchon 10' est représenté sur la figure 7.

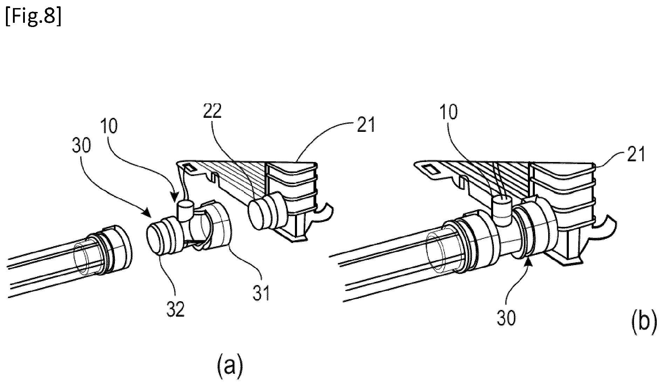

La figure 8 illustre un autre mode de réalisation du radiateur de refroidissement 20. Ici, la boîte collectrice 21 présente une tubulure de connexion 22 agencée pour recevoir, en vue d'une connexion fluidique, une durite de la boucle 200. Une bride 30 de raccordement est intercalée de manière réversible entre la tubulure de connexion 22 de la boîte collectrice 21 et la durite. Ladite bride comprend, selon le mode de réalisation représenté, une partie mâle 31 qui s'engage dans la durite et une partie femelle 32 qui reçoit la tubulure de connexion 22.

La bride 30 de raccordement porte le capteur 10 de mesure de propriétés physiques et/ou chimiques du liquide de refroidissement. En particulier, le capteur 10 est monté perpendiculairement à un axe longitudinal de la bride 30 à travers une ouverture transversale de ladite bride.

Le capteur 10 ainsi monté sur la bride de raccordement 30 amovible peut être associé aisément à une des boîtes collectrices 21 d'un radiateur 20 existant et intégrer de ce fait une boucle de refroidissement.

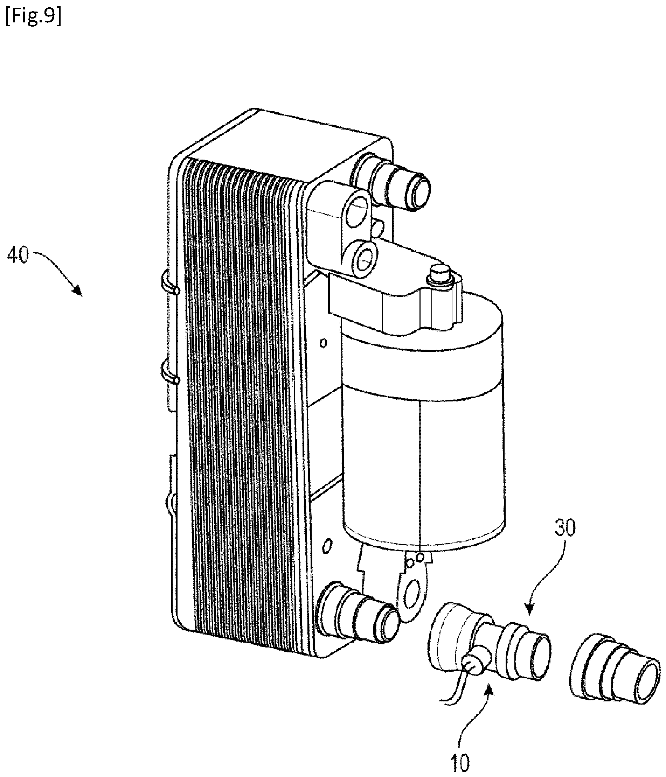

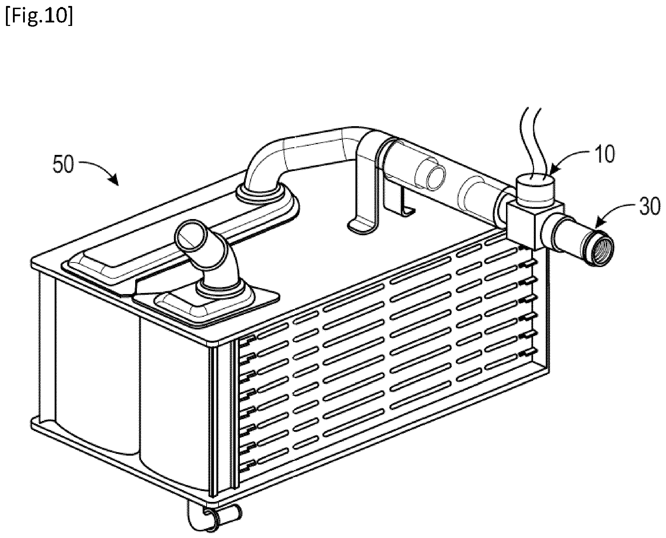

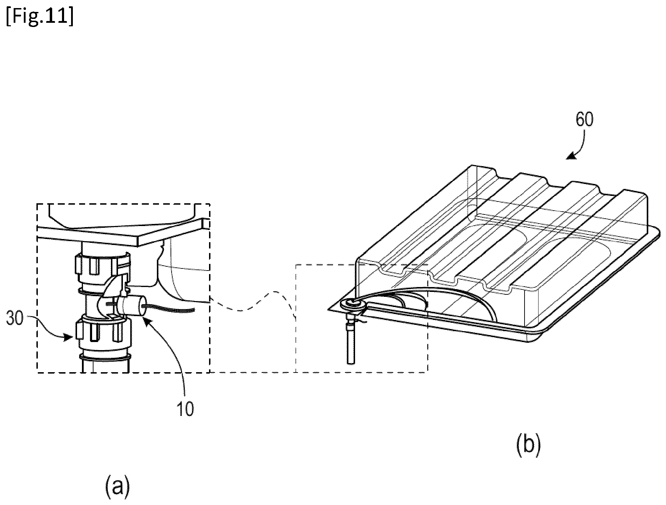

Le principe d'un capteur monté sur une bride de raccordement amovible peut être déployé sur différents types d'échangeurs de chaleur, notamment sur un condenseur à eau 40 (figure 9) ou un refroidisseur d'air de suralimentation à eau 50 (figure 10) ou encore un refroidisseur de batterie 60 (figure 11). L'ensemble formé par ladite bride et ledit capteur peut être monté au niveau d'une tubulure de connexion associée à une entrée et/ou une sortie d'un circuit de refroidissement parcourant lesdits échangeurs.

## Revendications

1. Boucle de refroidissement (100, 200, 300, 400) pour un véhicule automobile, ladite boucle étant configurée pour permettre un échange de chaleur entre un liquide de refroidissement et un liquide à refroidir, **caractérisée en ce que** la boucle de refroidissement comprend un capteur (10) embarqué positionné au moins en partie au contact du liquide de refroidissement, ledit capteur étant configuré pour fournir au moins une donnée relative à la viscosité et une donnée relative à la conductivité électrique dudit liquide de refroidissement, ladite boucle étant configurée pour fournir une mesure d'une concentration en soluté du liquide de refroidissement à partir desdites données, ladite mesure étant obtenue en tenant compte de ladite donnée relative à la conductivité électrique et de ladite donnée relative à la viscosité du liquide de refroidissement.

2. Boucle de refroidissement selon la revendication précédente, comprenant un microprocesseur configuré pour exploiter lesdites données.

3. Boucle de refroidissement selon l'une quelconque des revendications 1 à 2, dans laquelle ledit capteur comprend une sonde (11) configurée pour être mise au contact au moins partiellement du liquide de refroidissement, ledit liquide étant en écoulement ou au repos.

4. Boucle de refroidissement selon la revendication 3, comprenant un échangeur de chaleur (9), un vase d'expansion (4c), une pompe de circulation d'un liquide de refroidissement (4b), une vanne de contrôle (4a) de la circulation d'un liquide de refroidissement, une bride de raccordement (30), une culasse d'un moteur et/ou un bloc moteur.

5. Boucle de refroidissement selon la revendication précédente, comprenant un échangeur de chaleur (9), ledit échangeur comprenant une boîte collectrice (21) de circulation du liquide de refroidissement.

6. Boucle de refroidissement selon la revendication précédente dans laquelle la boîte collectrice (21) comprend une ouverture configurée pour recevoir sélectivement le capteur (10) ou un bouchon de fermeture (10').

7. Boucle de refroidissement selon l'une quelconque des revendications 5 ou 6, comprenant une bride amovible (30), ladite bride étant configurée pour être connectée à ladite boîte collectrice (21) et permettre un raccordement d'une tubulure pour le passage du liquide de refroidissement entre ladite tubulure et ladite boîte collectrice (21) à travers ladite bride (30), le capteur (10) étant positionné sur ladite bride (30).

8. Procédé de contrôle d'un liquide de refroidissement d'une boucle de refroidissement (100, 200, 300, 400) selon l'une quelconque des revendications précédentes, ledit procédé comprenant une étape de mesure pour fournir au moins une donnée relative à à la viscosité et une donnée relative à la conductivité électrique dudit liquide de refroidissement à l'aide dudit capteur (10), ladite mesure ayant lieu entre deux trajets d'un véhicule automobile.

## Patentansprüche

1. Kühlkreislauf (100, 200, 300, 400) für ein Kraftfahrzeug, wobei der besagte Kreislauf so konfiguriert ist, dass er einen Wärmeaustausch zwischen einer Kühlflüssigkeit und einer zu kühlenden Flüssigkeit ermöglicht , **dadurch gekennzeichnet, dass** der Kühlkreislauf einen an Bord befindlichen Sensor (10) umfasst, der zumindest teilweise in Kontakt mit der Kühlflüssigkeit positioniert ist, wobei der besagte Sensor so konfiguriert ist, dass er mindestens ein Datum bezüglich der Viskosität und ein Datum bezüglich der elektrischen Leitfähigkeit der besagten Kühlflüssigkeit bereitstellt , wobei der besagte Kreislauf so konfiguriert ist, dass er eine Messung einer Gelöststoffkonzentration der Kühlflüssigkeit aus den besagten Daten bereitstellt , wobei die besagte Messung unter Berücksichtigung des besagten Datums bezüglich der elektrischen Leitfähigkeit und des besagten Datums bezüglich der Viskosität der Kühlflüssigkeit erhalten wird.

2. Kühlkreislauf nach dem vorhergehenden Anspruch, umfassend einen Mikroprozessor, der dafür konfiguriert ist, die besagten Daten auszuwerten.

3. Kühlkreislauf nach einem der Ansprüche 1 bis 2, wobei der besagte Sensor eine Sonde (11) umfasst, die dafür konfiguriert ist, zumindest teilweise mit der Kühlflüssigkeit in Kontakt gebracht zu werden, wobei die besagte Flüssigkeit in Strömung oder im Ruhezustand ist.

4. Kühlkreislauf nach Anspruch 3, umfassend einen Wärmetauscher (9), ein Ausgleichsgefäß (4c), eine Kühlmittel-Umwälzpumpe (4b), ein Kühlmittel-Umwälzsteuerventil (4a), einen Anschlussflansch (30), einen Motorzylinderkopf und/oder einen Motorblock.

5. Kühlkreislauf nach dem vorhergehenden Anspruch, umfassend einen Wärmetauscher (9), wobei der besagte Tauscher einen Kühlmittel-Sammelkasten (21) umfasst.

6. Kühlkreislauf nach dem vorhergehenden Anspruch, wobei der Sammelkasten (21) eine Öffnung umfasst, die dafür konfiguriert ist, selektiv den Sensor (10) oder einen Verschlussstopfen (10 ) aufzunehmen.

7. Kühlkreislauf nach einem der Ansprüche 5 oder 6, umfassend einen abnehmbaren Flansch (30), wobei der besagte Flansch dafür konfiguriert ist, mit dem besagten Sammelkasten (21) verbunden zu werden und einen Anschluss einer Verrohrung für den Durchgang der Kühlflüssigkeit zwischen der besagten Verrohrung und dem besagten Sammelkasten (21) durch den besagten Flansch (30) zu ermöglichen, wobei der Sensor (10) an dem besagten Flansch (30) positioniert ist.

8. Verfahren zur Kontrolle einer Kühlflüssigkeit eines Kühlkreislaufs (100, 200, 300, 400) nach einem der vorhergehenden Ansprüche , wobei das besagte Verfahren einen Messschritt umfasst, um mindestens ein Datum bezüglich der Viskosität und ein Datum bezüglich der elektrischen Leitfähigkeit der besagten Kühlflüssigkeit unter Verwendung des besagten Sensors (10) bereitzustellen, wobei die besagte Messung zwischen zwei Fahrten eines Kraftfahrzeugs stattfindet.

## Claims

1. Cooling loop (100, 200, 300, 400) for a motor vehicle, said loop being configured to allow heat exchange between a coolant and a liquid to be cooled , **characterized in that** the cooling loop comprises an on-board sensor (10) positioned at least partially in contact with the coolant , said sensor being configured to provide at least data relating to the viscosity and data relating to the electrical conductivity of said coolant , said loop being configured to provide a measurement of a solute concentration of the coolant from said data , said measurement being obtained by taking into account said data relating to the electrical conductivity and said data relating to the viscosity of the coolant.

2. Cooling loop according to the preceding claim, comprising a microprocessor configured to process said data.

3. Cooling loop according to any one of claims 1 to 2, in which said sensor comprises a probe (11) configured to be brought into contact at least partially with the coolant, said liquid being in flow or at rest.

4. Cooling loop according to claim 3, comprising a heat exchanger (9), an expansion tank (4c), a coolant circulation pump (4b), a coolant circulation control valve (4a), a connection flange (30), an engine cylinder head and/or an engine block.

5. Cooling loop according to the preceding claim, comprising a heat exchanger (9), said exchanger comprising a coolant circulation header tank (21).

6. Cooling loop according to the preceding claim, in which the header tank (21) comprises an opening configured to selectively receive the sensor (10) or a closure plug (10).

7. Cooling loop according to any one of claims 5 or 6, comprising a removable flange (30), said flange being configured to be connected to said header tank (21) and allow a connection of a tubing for the passage of the coolant between said tubing and said header tank (21) through said flange (30), the sensor (10) being positioned on said flange (30).

8. Method for monitoring a coolant of a cooling loop (100, 200, 300, 400) according to any one of the preceding claims , said method comprising a measurement step to provide at least data relating to the viscosity and data relating to the electrical conductivity of said coolant using said sensor (10), said measurement taking place between two trips of a motor vehicle.
